# DEMANDE DE BREVET EUROPEEN

(11) **EP 1 901 476 A1**
(43) Date de publication de la demande: **19.03.2008**
(21) Numéro de dépôt: 06120663.7
(22) Date de dépôt: 14.09.2006
(51) Int. Cl.: H04L 9/08, H04N 5/00, H04N 7/167

(54) **Procédé de renouvellement de clés renouvelables dans un module de securité et de transmmission de ces clés**

(71) Demandeur: Nagracard S.A., 1033 Cheseaux-sur-Lausanne (CH)
(72) Inventeur: Brique, Olivier, 1802, Corseaux (CH)
(74) Mandataire: Nithardt, Joel

(57) **Abrégé**

La présente invention concerne un procédé de renouvellement de clés renouvelables dans un module de sécurité comportant au moins deux zones ayant des niveaux de sécurité différents. Ce procédé est caractérisé par les étapes suivantes :
- formation d'une nouvelle clé renouvelable (SCKey1*) par combinaison d'une clé renouvelable correspondante actuelle (SCKey1) et d'une valeur de changement (RNP);
- formation d'une nouvelle clé d'utilisateur (SubscriberKey2) par combinaison d'une clé d'utilisateur actuelle (SubscriberKey1) avec ladite valeur de changement (RNP);
- chiffrement de la nouvelle clé d'utilisateur (SubscriberKey2);
- transmission audit module de sécurité concerné de ladite nouvelle clé d'utilisateur chiffrée ([SubscriberKey2]_{K}).

## Description

### DOMAINE TECHNIQUE

La présente invention concerne un procédé de renouvellement et de transmission de clés de service, de clés de produits ou plus généralement de clés renouvelables à un module de sécurité.

### TECHNIQUE ANTERIEURE

Dans les systèmes actuels tels qu'en particulier les systèmes de télévision à péage, des clés de service sont utilisées du côté du fournisseur de contenu pour chiffrer des mots de contrôle cw servant à encrypter un contenu à accès conditionnel. Ces clés de service sont ensuite utilisées du côté utilisateur et pour déchiffrer ces mots de contrôle. Ces clés de service sont renouvelées régulièrement et sont envoyées aux modules de sécurité liés à un tel système de télévision à péage. D'autres clés renouvelables sont également utilisées dans de tels systèmes, notamment des clés liées aux produits.

Les clés de service, les clés de produits ou certaines clés renouvelables sont généralement globales c'est-à-dire qu'elles sont communes à tous les modules de sécurité associés à un même fournisseur de contenu. Ceci n'est pas optimal du point de vue de la sécurité du fait que si une clé est compromise pour un module de sécurité, il est possible d'utiliser cette clé de façon illicite avec d'autres modules de sécurité et d'accéder ainsi de façon illégale au contenu chiffré.

Il est possible de chiffrer ces clés renouvelables de façon individuelles, c'est-à-dire au moyen d'une clé unique et différente pour chaque module de sécurité. Dans ce cas, un message du type message de gestion unique EMM(u) (Entitlement Management Message - unique) doit être envoyé à chaque module de sécurité concerné et pour chaque clé renouvelable, lors de chaque changement de clé. Etant donné qu'un module de sécurité peut contenir plusieurs clés renouvelables, voire plusieurs dizaines de clés et que le nombre de modules de sécurité concernés peut être de plusieurs centaines de milliers, le nombre de messages de gestion à envoyer peut être énorme. De ce fait, en fonction de la bande passante disponible, il est possible que les clés renouvelables ne puissent pas être changées avec une fréquence très grande. Ceci peut également poser des problèmes au niveau de la sécurité du système.

### EXPOSE DE L'INVENTION

La présente invention se propose de pallier aux inconvénients des systèmes de l'art antérieur en fournissant un procédé qui permette de mettre à jour des clés renouvelables de façon sûre, c'est-à-dire de telle façon que si une clé est compromise pour un module de sécurité, il n'est pas possible d'utiliser cette clé compromise pour accéder au contenu chiffré à partir d'un autre module de sécurité. De plus, par ce procédé, il n'est pas nécessaire d'envoyer un nombre de messages correspondant au produit du nombre de modules de sécurité concernés par le nombre de clés à renouveler sur ces modules. Comme le nombre de messages à envoyer est bien moindre par rapport aux systèmes de l'art antérieur, il est possible, en disposant de la même bande passante, de changer de clé de façon plus fréquente et ainsi, d'augmenter la sécurité.

Le but de l'invention est atteint par un procédé de renouvellement de clés renouvelables dans un module de sécurité comportant au moins deux zones ayant des niveaux de sécurité différents, ce procédé étant caractérisé par les étapes suivantes :
- formation d'une nouvelle clé renouvelable (SCKey1*) par combinaison d'une clé renouvelable correspondante actuelle (SCKey1) et d'une valeur de changement (RNP);
- formation d'une nouvelle clé d'utilisateur (SubscriberKey2) par combinaison d'une clé d'utilisateur actuelle (SubscriberKey1) avec ladite valeur de changement (RNP);
- chiffrement de la nouvelle clé d'utilisateur (SubscriberKey2);
- transmission audit module de sécurité concerné de ladite nouvelle clé d'utilisateur chiffrée ([SubscriberKey2]_{K}).

Ce but est également atteint par un procédé de transmission de clés renouvelables à au moins un module de sécurité comportant au moins deux zones ayant des niveaux de sécurité différents, ce procédé étant caractérisé par les étapes suivantes :
- combinaison d'au moins une clé renouvelable (SCKey1) à transmettre, avec l'inverse d'une clé d'utilisateur (SubscriberKey1⁻¹) spécifique à l'utilisateur, de façon à obtenir une clé renouvelable combinée (SCKey1 ⊕ SubscriberKey1⁻¹);
- chiffrement de cette clé renouvelable combinée au moyen d'une première clé spécifique au module de sécurité;
- transmission au module de sécurité concerné, de ladite clé renouvelable combinée chiffrée ([SCKey1 ⊕ SubscriberKey1⁻¹]_{CLB-UK});
- chiffrement de la clé d'utilisateur (SubscriberKey1) au moyen d'une seconde clé spécifique au module de sécurité;
- transmission au module de sécurité concerné, de la clé d'utilisateur chiffrée.

Dans cette invention, les clés de service ou autres clés renouvelables ne sont pas tirées au hasard lorsqu'une nouvelle clé doit être utilisée, comme cela est généralement le cas dans les systèmes de l'art antérieur. Au contraire, ces clés sont construites à partir des clés précédentes, en suivant une règle connue.

Parallèlement à ceci, on utilise une clé dite clé d'utilisateur, spécifique à chaque utilisateur ou chaque module de sécurité. Cette clé est modifiée lors de chaque changement de clé renouvelable. Une nouvelle clé d'utilisateur n'est pas tirée au hasard, mais est également formée à partir de la clé d'utilisateur actuelle.

Lors d'un changement de clés renouvelables, le procédé de l'invention permet de n'envoyer que la clé d'utilisateur dans un message individuel EMM(u) pour chaque module de sécurité. Cette nouvelle clé d'utilisateur permet de trouver les nouvelles clés renouvelables à utiliser.

En pratique, l'invention se déroule en deux phases. Une première phase, dite d'initialisation et une deuxième phase, dite de renouvellement.

La première phase est utilisée pour les nouveaux abonnements ou lorsqu'un utilisateur change les services auxquels il a accès. Dans cette phase, les clés de service combinées avec d'autres éléments sont envoyées sous forme chiffrée aux modules de sécurité concernés. Ces messages sont envoyés de façon individuelle, ce qui signifie que chaque module de sécurité reçoit un message qui lui est propre et qui n'est pas utilisable par un autre module.

La deuxième phase, dite de renouvellement, concerne les modules de sécurité pour lesquels il n'y a pas de changement au niveau des services auxquels ils ont accès. Pour ces modules, il suffit d'envoyer un seul message individuel pour chaque module de sécurité pour mettre à jour l'ensemble des clés renouvelables.

En pratique, le nombre de modules de sécurité concernés par un changement de service est très faible par rapport aux nombre total de modules. De plus, il est fréquent qu'un module de sécurité comporte un grand nombre de clés renouvelables. Une telle clé renouvelable peut par exemple donner accès à un service, chaque service d'un bouquet pouvant avoir une clé différente. Il est donc fréquent qu'un module de sécurité ait une centaine de clés renouvelables différentes. Dans ce cas, les procédés de l'art antérieur nécessitent l'envoi d'une centaine de messages individuels pour chaque module de sécurité lors de chaque renouvellement des clés. Le procédé selon l'invention ne nécessite quant à lui l'envoi que d'un seul message individuel lors de chaque renouvellement.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 illustre schématiquement la transmission de clés renouvelables à un module de sécurité ainsi que la manière de déchiffrer un contenu chiffré au moyen d'une clé transmise selon le procédé de la présente invention; et
- la figure 2 représente le renouvellement de clés renouvelables pour un module de sécurité donné selon le procédé de l'invention.

### MANIERES DE REALISER L'INVENTION

Le procédé de l'invention, tel que représenté par les figures, est appliqué dans un module de sécurité comportant deux zones ayant des niveaux de sécurité différents. L'une des zones est par exemple formée d'une mémoire non volatile, qui peut être reprogrammable. L'autre zone, dite zone sécurisée CLB, a un niveau de sécurité plus élevé que la précédente. Elle comporte une clé spécifique à ce module de sécurité, c'est-à-dire unique et différente pour chaque module de sécurité lié à un même système d'accès. Cette clé peut être stockée dans un hardware sécurisé en utilisant par exemple un circuit électronique dédié et/ou des techniques d'obfuscation. Cette zone n'est pas nécessairement reprogrammable.

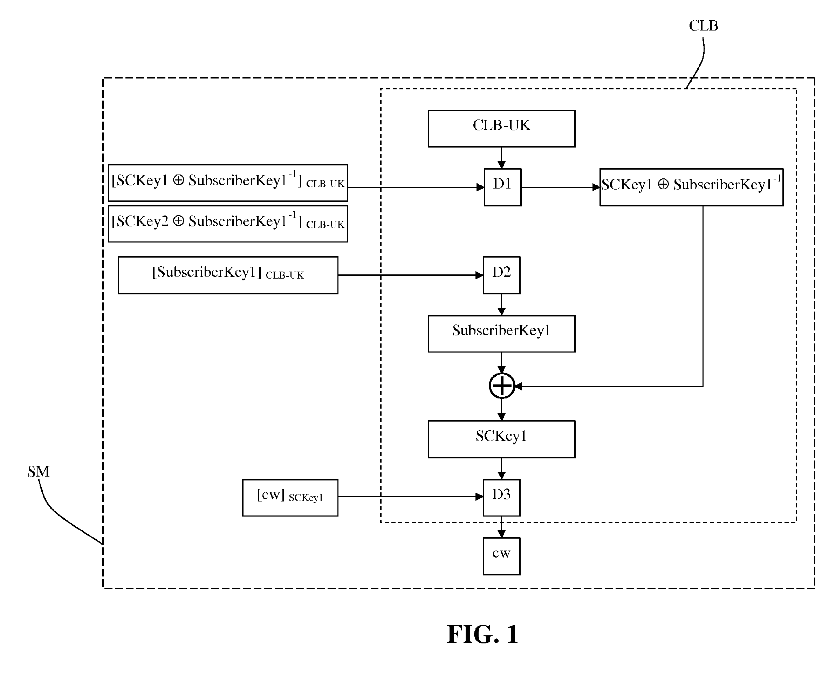

Comme indiqué précédemment, l'invention fonctionne en deux phases. La figure 1 illustre la première phase, c'est-à-dire la phase dite d'initialisation. Selon cette figure, on suppose que l'on doit transmettre à un module de sécurité SM deux clés renouvelables SCKey1 et SCKey2. Ce module de sécurité dispose d'une clé de module CLB-UK stockée dans la zone sécurisée CLB. Cette clé ne change en principe jamais pour un module de sécurité donné. Le module a également une clé dite d'utilisateur SubscriberKey1 , spécifique à ce module, mais qui change à chaque changement de clé renouvelable.

Le procédé de transmission de l'invention fonctionne de la manière suivante. La clé renouvelable SCKey1 est combinée avec l'inverse de la clé d'utilisateur SubscriberKey1, notée SubscriberKey1⁻¹ de façon à obtenir une clé renouvelable combinée [SCKey1 ⊕ SubscriberKeyl⁻¹]. L'inverse de cette clé d'utilisateur est telle que SubscriberKey1 ⊕ SubscriberKey1⁻¹ donne une identité, c'est-à-dire l'élément neutre dans le groupe considéré. La combinaison est une opération de groupe et peut être par exemple une fonction OU exclusif (XOR). Cette combinaison de la clé renouvelable et de l'inverse de la clé d'utilisateur est chiffrée par la clé de module CLB-UK du module de sécurité concerné de façon à obtenir une clé renouvelable combinée chiffrée [SCKey1 ⊕ SubscriberKey1⁻¹]_{CLB-UK}. Celle-ci est ensuite envoyée au module de sécurité concerné dans un message de type message de gestion unique EMM(u). On procède de même pour la clé renouvelable SCKey2, en utilisant la même clé d'utilisateur SubscriberKey1 ou plus précisément son inverse SubscriberKey1⁻¹ et la même clé de module CLB-UK.

II est à noter qu'un même message de gestion EMM(u) pourrait contenir deux ou plus de clés renouvelables combinées chiffrées, selon la taille de ces clés et la taille des messages. La clé d'utilisateur SubscriberKey1 est envoyée au module de sécurité sous forme chiffrée par la clé de module CLB-UK. ([SubscriberKey1 ]_{CLB-UK})

Une fois cette phase d'initialisation terminée, le module de sécurité dispose des clés renouvelables, mais uniquement sous forme chiffrée.

Lorsque les mots de contrôle doivent être déchiffrés pour un service ou un produit donné ou plus généralement, lorsque la nouvelle clé renouvelable doit être utilisée, la clé renouvelable combinée chiffrée [SCKey1 ⊕ SubscriberKey1⁻¹]_{CLB-UK} est envoyée à la zone sécurisée CLB du module de sécurité. Dans cette zone, la clé de module CLB-UK est utilisée pour extraire la clé renouvelable combinée [SCKey1 ⊕ SubscriberKey1-¹].

Parallèlement, la clé d'utilisateur chiffrée par la clé de module [SubscriberKey1]_{CLB-UK} est envoyée dans la zone sécurisée CLB. La clé de module CLB-UK est utilisée pour en extraire la clé d'utilisateur SubscriberKey1.

On a donc d'une part une clé renouvelable combinée [SCKey1 ⊕ SubscriberKey1⁻¹] et d'autre part la clé d'utilisateur [SubscriberKey1]. On applique ensuite sur cette clé renouvelable combinée [SCKey1 ⊕ SubscriberKey1⁻¹] et sur la clé d'utilisateur [SubscriberKey1], l'opération de combinaison ayant été utilisée pour combiner la clé renouvelable et la clé d'utilisateur.

Comme indiqué précédemment, cette combinaison est une opération de groupe. En notant l'opération ⊕, cette opération de groupe a la propriété que a ⊕ b⁻¹ ⊕ b = a. Dans notre cas, on aura SCKey1 ⊕ SubscriberKey1⁻¹ ⊕ SubscriberKey1 = SCKey1. Cette opération permet donc d'extraire la clé renouvelable SCKey1. Une telle opération de groupe est par exemple une fonction OU exclusif. D'autres fonctions aboutissant à un résultat analogue pourraient également être utilisées.

Les mots de contrôle cw chiffrés par la clé renouvelable SCKey1 sont reçus de façon conventionnelle par le module de sécurité. Ils sont envoyés à la zone sécurisée CLB. La clé renouvelable SCKey1 est utilisée pour déchiffrer le mot de contrôle qui peut ensuite être ressorti de cette zone sécurisée et qui peut être utilisé de façon conventionnelle.

Si les mots de contrôle sont chiffrés avec une autre clé, par exemple SCKey2, ce qui correspond à la réception d'un autre service, on procède de manière similaire, en remplaçant simplement la clé SCKey1 par SCKey2.

### Changement de clé de service

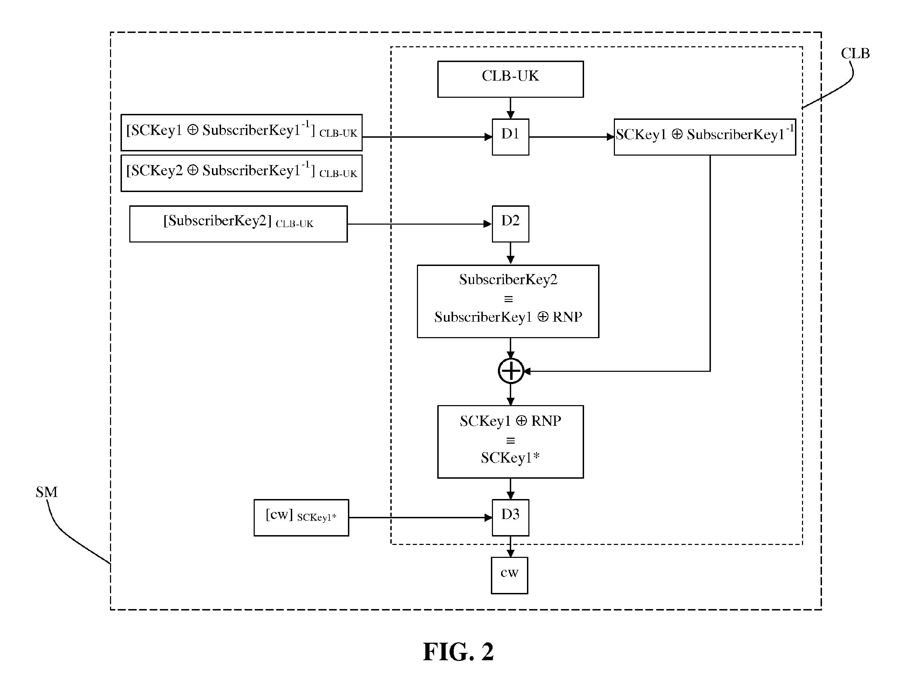

La figure 2 illustre le procédé de renouvellement de clés selon la présente invention. Dans le mode de réalisation illustré par la figure 2, on suppose que les deux clés SCKey1 et SCKey2 de la figure 1 sont remplacées par SCKey1 * et SCKey2*. Cela signifie que les mots de contrôle correspondant à un service donné, actuellement chiffrés par la clé SCKey1, vont être chiffrés par SCKey1*. De même, les mots de contrôle du service utilisant actuellement SCKey2 vont être chiffrés par SCKey2*. Lorsque le changement de clés aura eu lieu, il sera nécessaire de disposer de ces nouvelles clés SCKey1 * et SCKey2* pour accéder au contenu de ces services.

Selon ce procédé, lorsqu'une ou plusieurs clés renouvelables sont remplacées, elles ne sont pas choisies au hasard. La nouvelle clé SCKey1 * est formée de la clé actuelle correspondante SCKey1 à laquelle on combine une valeur de changement RNP. Cette valeur de changement peut être une valeur aléatoire ou une valeur d'une liste prédéterminée par exemple. La combinaison est la même opération de groupe que celle définie précédemment. Cette opération peut notamment être une fonction OU exclusif.

Notons SubscriberKey1 l'actuelle clé d'utilisateur et SubscriberKey2, la nouvelle clé d'utilisateur. Cette nouvelle clé d'utilisateur est formée de l'actuelle clé d'utilisateur à laquelle on combine la même valeur de changement RNP que celle utilisée pour les clés renouvelables. On a donc SubscriberKey2 = SubscriberKey1 ⊕ RNP.

De manière similaire, la nouvelle clé renouvelable SCKey1* correspondant à l'actuelle clé SCKey1 peut être notée comme SCKey1* = SCKey1 ⊕ RNP. On a également SCKey2* = SCKey2 ⊕ RNP.

Lors du renouvellement des clés, les clés de renouvellement combinées avec l'inverse de la clé d'utilisateur ne sont pas renvoyées aux modules de sécurité concernés. Seule la nouvelle clé d'utilisateur, chiffrée avec la clé de module [SubscriberKey2]_{CLB-UK} est envoyée de façon spécifique à chaque module de sécurité.

Cette clé chiffrée est déchiffrée dans le module de sécurité de façon à obtenir la nouvelle clé d'utilisateur SubscriberKey2. Comme indiqué précédemment, cette nouvelle clé d'utilisateur SubscriberKey2 est égale à l'actuelle clé d'utilisateur combinée avec la valeur de changement SubscriberKey2 = SubscriberKey1 ⊕ RNP.

Par hypothèse, le module de sécurité dispose déjà des clés renouvelables actuelles combinées avec l'inverse de la clé d'utilisateur actuelle (SCKey1 ⊕ SubscriberKey1⁻¹). Comme indiqué précédemment, la nouvelle clé renouvelable SCKey1 * est égale à SCKey1 ⊕ RNP. De plus, la nouvelle clé d'utilisateur SubscriberKey2 est égale à SubscriberKey1 ⊕ RNP.

En combinant, dans le module de sécurité, les éléments dont il dispose, à savoir (SCKey1 ⊕ SubscriberKey1-¹) et SubscriberKey2 (= SubscriberKey1 ⊕ RNP), on a :

SCKey1 ⊕ SubscriberKey1⁻¹ ⊕ SubscriberKey1 ⊕ RNP = SCKey1 ⊕ RNP = SCKey1*

De cette manière, on obtient donc la nouvelle clé renouvelable SCKey1*. Celle-ci peut ensuite être utilisée de façon conventionnelle pour déchiffrer en particulier les mots de contrôle cw envoyés sous forme chiffrée par cette nouvelle clé.

Cela signifie qu'en choisissant judicieusement la manière de former une nouvelle clé renouvelable et une nouvelle clé d'utilisateur, la combinaison de la clé renouvelable actuelle et de la clé d'utilisateur actuelle est identique à la combinaison de la nouvelle clé renouvelable et de la nouvelle clé d'utilisateur.

De ceci, on peut en déduire que, lors d'un changement de clé renouvelable, il n'est pas nécessaire de renvoyer la combinaison de la clé renouvelable et de la clé d'utilisateur à chaque module de sécurité. Seule la nouvelle clé d'utilisateur SubscriberKey2, c'est-à-dire l'actuelle clé d'utilisateur combinée avec la valeur de changement (SubscriberKey1 ⊕ RNP) est envoyée.

Ceci présente l'avantage que, même si le module de sécurité comporte plusieurs clés renouvelables, voire plusieurs dizaines de clés, un seul message par module de sécurité est suffisant pour mettre à jour les clés renouvelables, ce message contenant uniquement la nouvelle clé d'utilisateur.

Pour les modules de sécurité qui changent de type de services accessibles et qui diminuent leur niveau d'accès, une nouvelle clé d'utilisateur SubscriberKey-r différente pour chaque utilisateur est choisie au centre de gestion. Cette nouvelle clé d'utilisateur est envoyée individuellement aux modules de sécurité concernés, de même que toutes les clés renouvelables qui ont été conservées, ces clés étant envoyées sous forme de combinaison [SCKeyi ⊕ SubscriberKey-r⁻¹]. Si l'utilisateur bloque la réception des messages, il ne pourra plus accéder au contenu dès l'utilisation des nouvelles clés renouvelables par le fournisseur de contenu.

En pratique, le nombre de modules concernés par des changements de service est faible par rapport au nombre de modules dans lesquels les services sont conservés.

Dans la description précédente, il est fait référence aux nouvelles clés et aux clés actuelles. Ceci vient du fait qu'en principe, les nouvelles clés sont envoyées en avance, c'est-à-dire avant que ces nouvelles clés soient utilisées et pendant que d'autres clés sont en cours d'usage. De cette manière, lorsqu'une nouvelle clé est utilisée, elle est immédiatement disponible pour l'utilisateur. Dans le cas où l'utilisateur n'aurait pas reçu la nouvelle clé avant son utilisation par le fournisseur de contenu, ce qui peut arriver lorsque l'unité de réception était hors service pendant un certain temps, ce qui dénommé dans le texte "nouvelle clé" et "clé actuelle" devrait en fait respectivement être remplacé par "clé actuelle" et "ancienne clé". Le principe de l'invention n'en est toutefois pas modifié.

## Revendications

1. Procédé de renouvellement de clés renouvelables dans un module de sécurité comportant au moins deux zones ayant des niveaux de sécurité différents, ce procédé étant **caractérisé par** les étapes suivantes :
- formation d'une nouvelle clé renouvelable (SCKey1*) par combinaison d'une clé renouvelable correspondante actuelle (SCKey1) et d'une valeur de changement (RNP);
- formation d'une nouvelle clé d'utilisateur (SubscriberKey2) par combinaison d'une clé d'utilisateur actuelle (SubscriberKey1) avec ladite valeur de changement (RNP);
- chiffrement de la nouvelle clé d'utilisateur (SubscriberKey2);
- transmission audit module de sécurité concerné de ladite nouvelle clé d'utilisateur chiffrée.

2. Procédé de renouvellement de clés renouvelables selon la revendication 1, **caractérisé en ce que** la zone du module de sécurité ayant le niveau de sécurité le plus élevé contient une clé de module (CLB-UK) spécifique à ce module de sécurité et **en ce que** ladite nouvelle clé d'utilisateur est chiffrée avec la clé de module (CLB-UK) préalablement à sa transmission.

3. Procédé de renouvellement de clés renouvelables selon la revendication 1, **caractérisé en ce que** l'opération de combinaison de la clé renouvelable actuelle (SCKey1) avec la valeur de changement (RNP) et l'opération de combinaison de la clé d'utilisateur actuelle (SubscriberKey1) avec ladite valeur de changement (RNP) sont des opérations identiques.

4. Procédé de renouvellement de clés renouvelables selon les revendications 1 ou 3, **caractérisé en ce que** lesdites combinaisons sont des opérations de groupe.

5. Procédé de renouvellement de clés renouvelables selon la revendication 3, **caractérisé en ce que** lesdites combinaisons utilisent une fonction OU Exclusif.

6. Procédé de renouvellement de clés renouvelables selon la revendication 1, **caractérisé en ce que** lesdites clés renouvelables actuelles et nouvelles sont utilisées pour accéder à un contenu chiffré.

7. Procédé de renouvellement de clés renouvelables selon la revendication 1, **caractérisé en ce qu'**il comporte en outre les étapes suivantes :
- déchiffrement de la nouvelle clé d'utilisateur (SubscriberKey2) par le module de sécurité;
- combinaison de cette nouvelle clé d'utilisateur (SubscriberKey2) avec la combinaison de l'actuelle clé renouvelable SCKey1 et de l'inverse de l'actuelle clé d'utilisateur (SubscriberKey1⁻¹) de façon à obtenir ladite nouvelle clé renouvelable (SCKey1*).

8. Procédé de transmission de clés renouvelables à au moins un module de sécurité comportant au moins deux zones ayant des niveaux de sécurité différents, ce procédé étant **caractérisé par** les étapes suivantes :
- combinaison d'au moins une clé renouvelable (SCKey1) à transmettre, avec l'inverse d'une clé d'utilisateur (SubscriberKey1⁻¹) spécifique à l'utilisateur, de façon à obtenir une clé renouvelable combinée (SCKey1 ⊕ SubscriberKey1⁻¹);
- chiffrement de cette clé renouvelable combinée au moyen d'une première clé spécifique au module de sécurité;
- transmission au module de sécurité concerné, de ladite clé renouvelable combinée chiffrée ([SCKey1 ⊕ SubscriberKey1⁻¹]_{CLB-UK});
- chiffrement de la clé d'utilisateur (SubscriberKey1) au moyen d'une seconde clé spécifique au module de sécurité;
- transmission au module de sécurité concerné, de la clé d'utilisateur chiffrée.

9. Procédé de transmission de clés renouvelables selon la revendication 8, **caractérisé en ce que** ladite première et ladite seconde clé spécifique au module de sécurité sont identiques.

10. Procédé de transmission de clés renouvelables selon la revendication 8, **caractérisé en ce que** la zone ayant le niveau de sécurité le plus élevé contient une clé de module (CLB-UK) spécifique à ce module de sécurité, et **en ce que** cette clé de module (CLB-UK) correspond à ladite première clé spécifique au module de sécurité et/ou à ladite seconde clé spécifique au module de sécurité.
